# EUROPÄISCHE PATENTSCHRIFT

(11) **EP 3 686 341 B1**
(45) Veröffentlichungstag und Bekanntmachung des Hinweises auf die Patenterteilung: **15.09.2021**
(21) Anmeldenummer: 19212472.5
(22) Anmeldetag: 29.11.2019
(51) Int. Cl.: D21G 1/02

(54) **WALZENWECHSEL**
ROLL CHANGE
CHANGEMENT DE CYLINDRE

(30) Priorität: 25.01.2019 DE 102019101807
(43) Veröffentlichungstag der Anmeldung: 29.07.2020
(73) Patentinhaber: Voith Patent GmbH, 89522 Heidenheim (DE)
(72) Erfinder: Drabek, Manfred, 73450 Neresheim (DE); Blinov, Ivan, 89551 Königsbronn (DE); Remmele, Peter, 89522 Heidenheim (DE)
(74) Vertreter: Voith Patent GmbH - Patentabteilung

(56) Entgegenhaltungen:
- WO-A1-01/61107
- US-A- 3 244 090

## Beschreibung

Die Erfindung betrifft eine Walzenwechselvorrichtung für eine Maschine zur Herstellung und/oder Veredlung einer Materialbahn, welche eine in der Maschine quer zur Bahnlaufrichtung zu positionierende Tragschiene sowie wenigstens einen entlang der Tragschiene fahrenden Transportwagen umfasst, der die zu wechselnde Walze aus der Maschine heraus- und die neue Walze wieder Eine Vorrichtung dieser Art ist beispielsweise aus US 3 244 090 A bekannt.

Die Erfindung betrifft ebenso ein Verfahren zum Walzenwechsel bei einer Maschine zur Herstellung und/oder Veredlung einer Materialbahn, wobei in der Maschine eine Tragschiene quer zur Bahnlaufrichtung positioniert und über wenigstens einen entlang der Tragschiene fahrenden Transportwagen die zu wechselnde Walze aus der Maschine heraus- und die neue Walze wieder hineingeführt wird.

In derartigen Maschinen befinden sich viele Walzen, die mit der Materialbahn oder endlos umlaufenden Bändern der Maschine in Kontakt kommen und infolge Verschleiß oder Beschädigung gewechselt werden müssen.

Alle Walzen, welche auf Grund ihrer Einbauposition nicht direkt mit Hilfe eines Kranes aus der Maschine gehoben werden können, benötigen für den Walzenwechsel eine spezielle Vorrichtung.

Im Allgemeinen wird dabei in der Maschine eine quer zur Bahnlaufrichtung verlaufende Tragschiene positioniert, an der die Walze aus und in die Maschine transportiert wird. Da diese Maschinen sehr breit und die zu transportierenden Walzen dementsprechend auch sehr schwer sind, muss die Tragschiene entsprechend stabil gestaltet sein, was ebenso ein relativ hohes Gewicht mit sich bringt.

Beispielsweise können Papiermaschinen durchaus Breiten von 10 m aufweisen, was das Einführen der Tragschiene schwierig gestaltet.

Darüber hinaus ist die Fixierung der Tragschiene an den speziellen Einbauort in der Maschine angepasst und erfordert dabei die unterschiedlichsten Hilfsmittel, wie Halter, Umlenkrollen, Konsolen, Gegenhalter, Gebäudeanbauten o.ä.

Das Einbringen der Tragschien ist meist sehr aufwendig, da der Maschinenbalken zwischen den Fundamentschienen Öffnungen und Unebenheiten z.B. Bütten, Keller usw. enthält.

Die Aufgabe der Erfindung ist es daher den Walzenwechsel zu vereinfachen.

Erfindungsgemäß wurde die Aufgabe hinsichtlich der Vorrichtung dadurch gelöst, dass die Tragschiene mit einer parallel verlaufenden Montageschiene gekoppelt ist, welche zur Montage und Demontage der Tragschiene in der Maschine entlang der Tragschiene und teilweise über die Tragschiene hinaus verschiebbar ist.

Die Montage der Tragschiene in der Maschine erfolgt dabei mit Hilfe der Montageschiene. Zu Beginn wird die Tragschiene gemeinsam mit der Montageschiene an einer Seite der Maschine, vorzugsweise der Führerseite in die vorgesehene Einbauposition gebracht und dabei senkrecht zur Bahnlaufrichtung ausgerichtet. Anschließend wird die Montageschiene entlang der Tragschiene, teilweise über die Tragschiene hinaus in die Maschine quer zur Bahnlaufrichtung verschoben und in der Maschine befestigt. Danach kann die Tragschiene einfach entlang der Montageschiene in die Maschine geschoben und dort fixiert werden.

Diese Lösung ist universell einsetzbar und erfordert kaum spezielle Anpassungen an die Einbauposition.

Der Transport der Walze erfolgt in bekannter Weise mittels Transportwagen entlang der Tragschiene aus und in die Maschine. Bei der Ablage der Walze in und der Aufnahme der Walze aus der Lagervorrichtung des Transportwagens kann ein Kran zum Einsatz kommen.

Dieser Kran kann auch dazu genutzt werden, die Tragschiene während der Montage und Demontage in der Maschine zumindest teilweise zu tragen. Hierzu ist es vorteilhaft, wenn die Tragschiene zumindest an einem, vorzugsweise dem der Maschine abgewandten Ende und einem zwischen den Enden liegenden mittleren Bereich ein Koppelelement für die Befestigung an einem Kran besitzt.

Die Kopplung im mittleren Bereich erfolgt dabei mit Vorteil zur Positionierung der Tragschiene an der Maschinenseite und die Kopplung am Ende nach der Befestigung des Endes der Montageschiene in der Maschine.

Zur sicheren Lagerung der Walze sollte jedem Walzenende jeweils ein Transportwagen zugeordnet sein, welche bei Bedarf auch miteinander gekoppelt sein können.

Im Interesse einer einfachen Kopplung und Verschiebbarkeit sollte die Montageschiene in der Tragschiene verschiebbar gelagert sein.

Je nach Einbausituation der Walze kann es vorteilhaft sein, dass sich die Tragschiene während des Walzenwechsels auf der Stuhlung oder dem Fundament der Maschine abstützt und der Transportwagen mit der über ihm liegenden Walze auf der Tragschiene entlang fährt oder dass die Tragschiene während des Walzenwechsels über Verbindungselemente an über ihr vorhandenen Stuhlungsteilen befestigt ist und ein entsprechend angepasster Transportwagen mit der unter ihm hängenden Walze an und unter der Tragschiene entlang fährt.

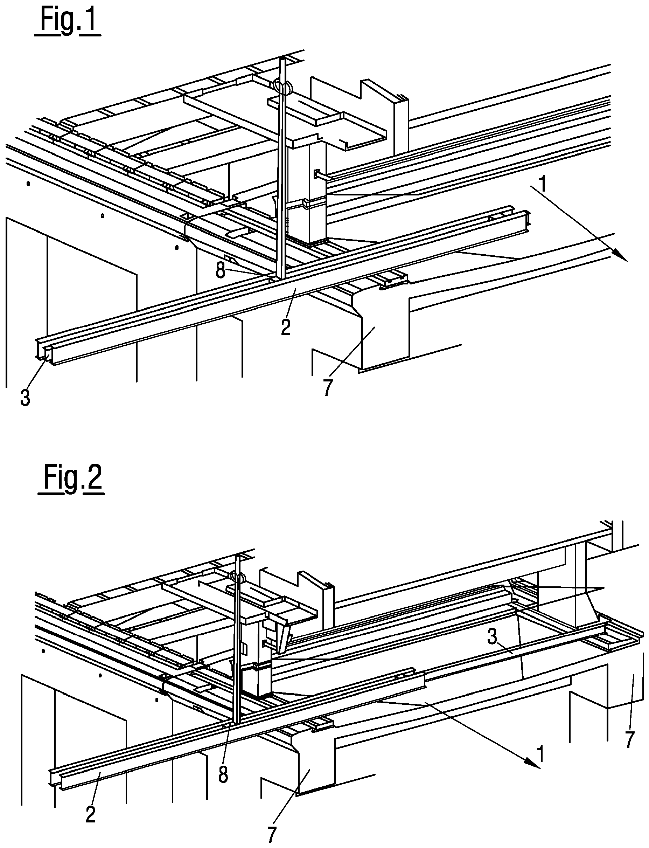

Nachfolgend soll die Erfindung an zwei Ausführungsbeispielen näher erläutert werden. In der beigefügten Zeichnung zeigen die Figuren 1 bis 5 den Ablauf bei der Positionierung einer Tragschiene 2 für einen Walzenwechsel in einer Papiermaschine.

Die Maschine besitzt eine trieb- und eine führerseitige Stuhlung 7, welche sich auf dem Maschinenfundament abstützt. Neben verschiedenen Einbauten wie dem Stoffauflauf, Formerleisten, Dampfblaskasten, Saugkästen usw. sind in der triebseitigen und der führerseitigen Stuhlung 7 jeweils die Enden einer Vielzahl von Walzen 6 gelagert. Neben Press- und Glättwalzen sind dies vor allem Leitwalzen zur Umlenkung der Materialbahn oder endlos umlaufender Bänder der Maschine, wie Pressfilz, Transferband oder Trockensieb.

Diese Walzen 6 verschleißen wegen der hohen Beanspruchung und Maschinengeschwindigkeiten von 2.000 m/min und mehr relativ schnell. Sind die Walzen 6 von oben einem Kran nicht frei zugänglich, so muss für einen Walzenwechsel in der Maschine quer zur Bahnlaufrichtung 1 eine Tragschiene 2 montiert werden.

Entlang dieser Tragschiene 2 kann die zu wechselnde Walze 6 quer zur Bahnlaufrichtung 1 aus und die neue Walze 6 in die Maschine geführt werden. Dabei werden die Enden der Walze 6 von je einem Transportwagen 4,5 gehalten, welche in der Tragschiene 2 geführt und entlang dieser bewegbar sind.

Unterstützt wird die Montage der Tragschiene 2 von einem Kran, wobei die Tragschiene 2 an dem, vor der Montage von der Maschine wegweisendem Ende und einem zwischen den Enden liegenden mittleren Bereich ein Koppelelement 8 für die Befestigung an dem Kran besitzt.

Zu Beginn wird die Tragschiene 2 gemäß Figur 1 über das Koppelelement 8 des mittleren Bereiches vom Kran gehalten, die Tragschiene 2 senkrecht zur Bahnlaufrichtung 1 ausgerichtet und an der entsprechenden Stelle der Maschine teilweise in diese eingeführt.

Um die Montage der Tragschiene 2 zu vereinfachen, ist in dieser eine Montageschiene 3 verschiebbar gelagert. Diese parallel zur Tragschiene 2 verlaufende Montageschiene 3 kann so zur Montage und Demontage der Tragschiene 2 in der Maschine entlang der Tragschiene 2 und teilweise über die Tragschiene 2 hinaus teleskopähnlich verschoben werden.

Nach dem teilweisen Einführen der Tragschiene 2 in die Maschine wird gemäß Figur 2 die Montageschiene 3 aus der Tragschiene 2 heraus zur gegenüberliegenden, vorzugsweise der triebseitigen Stuhlung 7 gezogen und dort befestigt. Bei Bedarf kann das Herausziehen der Montageschiene 3 mittels Seilwinde erfolgen.

Da sich die Tragschiene 2 dabei auch auf der führerseitigen Stuhlung 7 abstützt, ist die Tragschiene 2 bereits ausreichend fixiert, so dass der Kran umgehängt werden kann.

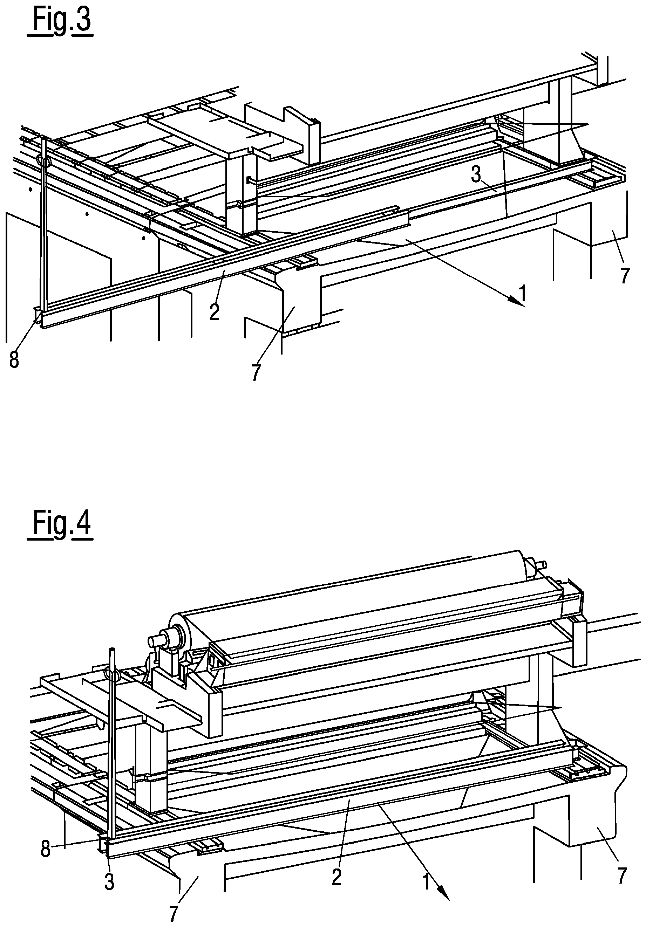

Wie in Figur 3 zu erkennen, wird der Kran nun mit dem Koppelelement 8 verbunden, welches sich an dem von der Maschine wegweisenden Ende der Tragschiene 2 befindet.

Mit Hilfe des Kranes und/oder bei Bedarf auch unter Zuhilfenahme einer Seilwinde wird die Tragschiene 2 anschließend entlang der Montageschiene 3 bis zur gegenüberliegenden Stuhlung 7 in die Maschine geschoben. Um dies zu erleichtern, sollte das noch aus der Maschine ragende Ende der Tragschiene 2 vom Kran geringfügig angehoben werden.

Hat die Tragschiene 2 ihre Endposition gemäß Figur 4 erreicht, so kann diese über Verbindungselemente an der Stuhlung 7 befestigt werden. Außerdem wird der Kran abgehängt.

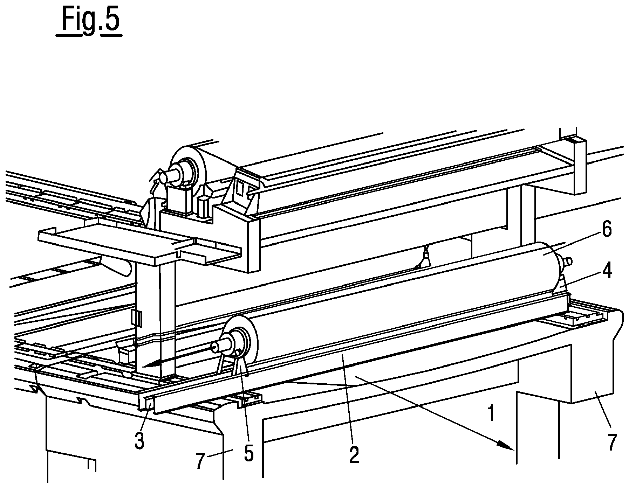

In den Figuren 1 bis 5 stützt sich die Tragschiene 2 während des Walzenwechsels auf der Stuhlung 7 der Maschine ab. Wie in Figur 5 gezeigt, ist dabei jedem Walzenende jeweils ein Transportwagen 4,5 zugeordnet.

Diese Transportwagen 4,5 fahren mit der über der Tragschiene 2 liegenden Walze 6 auf und entlang der Tragschiene 2.

So kann die zu wechselnde Walze 6 einfach aus der Maschine und die neue Walze 6 in die Maschine geführt werden.

Alternativ ist es allerdings auch möglich, dass die Tragschiene 2 während des Walzenwechsels über Verbindungselemente an über ihr vorhandenen Teilen der Stuhlung 7 befestigt wird. Dies bedeutet dann, dass die Transportwagen 4,5 mit der unter ihnen hängenden Walze 6 an und unter der Tragschiene 2 entlang fahren.

Die Walzenwechselvorrichtung ist so universell einsetzbar und erfordert keine größeren Anpassungen an die spezielle Einbausituation.

## Patentansprüche

1. Walzenwechselvorrichtung für eine Maschine zur Herstellung und/oder Veredlung einer Materialbahn, welche eine in der Maschine quer zur Bahnlaufrichtung (1) zu positionierende Tragschiene (2) sowie wenigstens einen entlang der Tragschiene (2) fahrenden Transportwagen (4,5) umfasst, der die zu wechselnde Walze (6) aus der Maschine heraus- und die neue Walze (6) wieder hineinführt, **dadurch gekennzeichnet,**
**dass** die Tragschiene (2) mit einer parallel verlaufenden Montageschiene (3) gekoppelt ist, welche zur Montage und Demontage der Tragschiene (2) in der Maschine entlang der Tragschiene (2) und teilweise über die Tragschiene (2) hinaus verschiebbar ist.

2. Vorrichtung nach Anspruch 1,
**dadurch gekennzeichnet,**
**dass** die Montageschiene (3) in der Tragschiene (2) verschiebbar gelagert ist.

3. Vorrichtung nach Anspruch 1 oder 2,
**dadurch gekennzeichnet,**
**dass** jedem Walzenende jeweils ein Transportwagen (4,5) zugeordnet ist.

4. Vorrichtung nach einem der vorherigen Ansprüche,
**dadurch gekennzeichnet,**
**dass** sich die Tragschiene (2) während des Walzenwechsels auf der Stuhlung (7) oder dem Fundament der Maschine abstützt.

5. Vorrichtung nach einem der Ansprüche 1 bis 3,
**dadurch gekennzeichnet,**
**dass** die Tragschiene (2) während des Walzenwechsels über Verbindungselemente an über ihr vorhandenen Stuhlungsteilen befestigt ist.

6. Vorrichtung nach einem der vorherigen Ansprüche,
**dadurch gekennzeichnet,**
**dass** die Tragschiene (2) zumindest an einem Ende und einem zwischen den Enden liegenden mittleren Bereich ein Koppelelement (8) für die Befestigung an einem Kran besitzt.

7. Verfahren zum Walzenwechsel bei einer Maschine zur Herstellung und/oder Veredlung einer Materialbahn, wobei in der Maschine eine Tragschiene (2) quer zur Bahnlaufrichtung (1) positioniert und über wenigstens einen entlang der Tragschiene (2) fahrenden Transportwagen (4,5) die zu wechselnde Walze (6) aus der Maschine heraus- und die neue Walze (6) wieder hineingeführt wird, insbesondere mittels einer Vorrichtung nach einem der vorhergehenden Ansprüche, **dadurch gekennzeichnet,**
**dass** die Tragschiene (2) mit einer parallel verlaufenden Montageschiene (3) gekoppelt ist, welche zur Montage der Tragschiene (2) in der Maschine entlang der Tragschiene (2), teilweise über die Tragschiene (2) hinaus in die Maschine quer zur Bahnlaufrichtung (1) verschoben und in der Maschine befestigt wird und die Tragschiene (2) anschließend entlang der Montageschiene (3) in die Maschine geschoben wird.

8. Verfahren nach Anspruch 7,
**dadurch gekennzeichnet,**
**dass** die Tragschiene (2) während der Montage und Demontage in der Maschine zumindest teilweise von einem Kran getragen wird.

9. Verfahren nach Anspruch 7 oder 8,
**dadurch gekennzeichnet,**
**dass** sich die Tragschiene (2) während des Walzenwechsels auf der Stuhlung (7) oder dem Fundament der Maschine abstützt und der Transportwagen (4,5) mit der über ihm liegenden Walze (6) auf der Tragschiene (2) fährt.

10. Verfahren nach Anspruch 7 oder 8,
**dadurch gekennzeichnet,**
**dass** die Tragschiene (2) während des Walzenwechsels über Verbindungselemente an über ihr vorhandenen Stuhlungsteilen befestigt ist und der Transportwagen (4,5) mit der unter ihm hängenden Walze (6) an und unter der Tragschiene (2) fährt.

## Claims

1. Roll changing device for a machine for producing and/or finishing a material web, which comprises a support rail (2) to be positioned in the machine transversely to the web running direction (1) and at least one transport carriage (4, 5) moving along the support rail (2), which guides the roller (6) to be changed out of the machine and guides the new roller (6) in again, **characterized in that** the support rail (2) is coupled to a mounting rail (3) which runs parallel and can be displaced in the machine along the support rail (2) and partially beyond the support rail (2) in order to mount and dismount the support rail (2).

2. Device according to claim 1, **characterised in that** the mounting rail (3) is displaceably mounted in the support rail (2).

3. Device according to claim 1 or 2, **characterised in that** a transport carriage (4, 5) is assigned to each roller end.

4. Device according to one of the previous claims, **characterised in that** the support rail (2) is supported on the framing (7) of the machine during the roller change.

5. Device according to one of the claims 1 to 3, **characterised in that** the support rail (2) is fastened via connecting elements to chair parts present above it during the roller change.

6. Device according to one of the previous claims, **characterised in that** the support rail (2) has a coupling element (8) for attachment to a crane at least at one end and a central region located between the ends.

7. Method for changing rollers in a machine for producing and/or finishing a material web, wherein a support rail (2) is positioned in the machine transversely to the web running direction (1) and the roller (6) to be changed is guided out of the machine and the new roller (6) is guided in again via at least one transport carriage (4, 5) travelling along the support rail (2), in particular by means of a device according to one of the preceding claims, **characterised in that** the support rail (2) is coupled to a mounting rail (3) which runs parallel and which, for mounting the support rail (2) in the machine, is displaced along the support rail (2), partially beyond the support rail (2) into the machine transversely to the web running direction (1) and is fastened in the machine, and the support rail (2) is then pushed into the machine along the mounting rail (3).

8. Method according to claim 7, **characterised in that** the support rail (2) is at least partially supported by a crane during assembly and disassembly in the machine.

9. Method according to claim 7 or 8, **characterised in that** the support rail (2) is supported on the framing (7) of the machine during the roller change and the transport carriage (4, 5) travels on the support rail (2) with the roller (6) lying above it.

10. Method according to claim 7 or 8, **characterised in that** during the roller change the support rail (2) is fastened via connecting elements to chair parts present above it and the transport carriage (4, 5) travels on and under the support rail (2) with the roller (6) suspended below it.

## Revendications

1. Dispositif de changement de rouleau pour une machine de production et/ou de finition d'une bande de matériau, qui comprend un rail de support (2) à positionner dans la machine transversalement à la direction de déplacement de la bande (1) et au moins un chariot de transport (4, 5) se déplaçant le long du rail de support (2), qui guide le rouleau (6) à changer hors de la machine et guide le nouveau rouleau (6) à nouveau, **caractérisé en ce que** le rail de support (2) est couplé à un rail de montage (3) qui s'étend parallèlement et peut être déplacé dans la machine le long du rail de support (2) et partiellement au-delà du rail de support (2) afin de monter et démonter le rail de support (2).

2. Dispositif selon la revendication 1, **caractérisé en ce que** le rail de montage (3) est monté de façon déplaçable dans le rail de support (2).

3. Dispositif selon la revendication 1 ou 2, **caractérisé en ce qu'**un chariot de transport (4, 5) est associé à chaque extrémité de rouleau.

4. Dispositif selon l'une des revendications précédentes, **caractérisé en ce que** le rail de support (2) est en appui sur la chaise (7) ou la fondation de la machine pendant le changement de rouleau.

5. Dispositif selon l'une des revendications 1 à 3, **caractérisé en ce que** le rail de support (2) est fixé par des éléments de liaison à des parties de siège présentes au-dessus de lui lors du changement de rouleau.

6. Dispositif selon l'une des revendications précédentes, **caractérisé en ce que** le rail support (2) présente un élément d'accouplement (8) pour la fixation à une grue à au moins une extrémité et une zone centrale située entre les extrémités.

7. Procédé de changement de rouleaux dans une machine de fabrication et/ou de finition d'une bande de matériau, dans lequel un rail de support (2) est positionné dans la machine transversalement à la direction de défilement de la bande (1) et le rouleau (6) à changer est sorti de la machine et le nouveau rouleau (6) est à nouveau introduit par au moins un chariot de transport (4, 5) se déplaçant le long du rail de support (2), en particulier au moyen d'un dispositif selon l'une des revendications précédentes, **caractérisé en ce que** le rail de support (2) est couplé à un rail de montage (3) qui s'étend parallèlement et qui, pour le montage du rail de support (2) dans la machine, est déplacé le long du rail de support(2), dépasse partiellement le rail de support (2) dans la machine transversalement à la direction d'avance de la bande (1) et est fixé dans la machine, et le rail de support (2) est ensuite poussé dans la machine le long du rail de montage (3).

8. Procédé selon la revendication 7, **caractérisé en ce que** le rail de support (2) est au moins partiellement supporté par une grue pendant le montage et le démontage dans la machine.

9. Procédé selon la revendication 7 ou 8, **caractérisé en ce que** le rail de support (2) est supporté sur la chaise (7) ou la fondation de la machine pendant le changement de rouleau et le chariot de transport (4, 5) se déplace sur le rail de support (2) avec le rouleau (6) situé au-dessus de lui.

10. Procédé selon la revendication 7 ou 8, **caractérisé en ce que**, pendant le changement de rouleau, le rail de support (2) est fixé par des éléments de liaison à des parties de siège présentes au-dessus de lui et le chariot de transport (4, 5) se déplace sur et sous le rail de support (2) avec le rouleau (6) suspendu en dessous de lui.
